# EUROPÄISCHE PATENTSCHRIFT

(11) **EP 0 766 029 B1**
(45) Veröffentlichungstag und Bekanntmachung des Hinweises auf die Patenterteilung: **01.08.2001**
(21) Anmeldenummer: 96115189.1
(22) Anmeldetag: 21.09.1996
(51) Int. Cl.: F16K 31/06

(54) **Magnetventil sowie Verfahren zu dessen Herstellung**
Solenoid valve and manufacturing process
Electrovanne et procédé de fabrication

(30) Priorität: 27.09.1995 DE 19535945
(43) Veröffentlichungstag der Anmeldung: 02.04.1997
(73) Patentinhaber: HYDRAULIK-RING ANTRIEBS- UND STEUERUNGSTECHNIK GmbH, D-72622 Nürtingen (DE)
(72) Erfinder: Niethammer, Bernd, 72622 Nürtingen, (DE); Knecht, Andreas, 72119 Ammerbuch, (DE)
(74) Vertreter: Jackisch-Kohl, Anna-Katharina

(56) Entgegenhaltungen:
- WO-A-94/11661
- DE-A- 1 934 212
- GB-A- 718 264

## Beschreibung

Die Erfindung betrifft ein Magnetventil nach dem Oberbegriff des Anspruches 1 sowie ein Verfahren zu dessen Herstellung nach dem Oberbegriff des Anspruches 5.

Bei bekannten Proportionalmagnetventilen sind die Ventil- und der Magnetteil zum Beispiel durch Verstemmen oder über eine Verschraubung starr miteinander verbunden. Beim Einbau dieser Teile in ein Gehäuse tritt häufig das Problem auf, daß beim Einsetzen des Ventilteiles in den entsprechenden Aufnahmeraum eine Schiefstellung erfolgt. Dabei kann es leicht vorkommen, daß der Kolben des Ventilteiles hängenbleibt und dadurch das Proportionalmagnetventil nicht mehr funktionsgemäß arbeitet.

Der Erfindung liegt die Aufgabe zugrunde, das gattungsgemäße Magnetventil und das gattungsgemäße Verfahren so auszubilden, daß beim Einbau des Ventilteiles eventuell auftretende Schief- bzw. Schrägstellungen einwandfrei ausgeglichen werden können, ohne ein Hängenbleiben des Kolbens während des Einsatzes befürchten zu müssen.

Diese Aufgabe wird beim gattungsgemäßen Magnetventil erfindungsgemäß mit den kennzeichnenden Merkmalen des Anspruches 1 und beim gattungsgemäßen Verfahren erfindungsgemäß mit den kennzeichnenden Merkmalen des Anspruches 5 gelöst.

Infolge der erfindungsgemäßen Ausbildung kann eine Schiefstellung des Ventilteiles beim Einbau in einen entsprechenden Aufnahmeraum auf einfache Weise dadurch ausgeglichen werden, daß der Ventilteil gegenüber dem Magnetteil leicht kippen kann. Dadurch ist einwandfrei vermieden, daß der Kolben des Ventilteiles im Betrieb des Magnetventiles sich verklemmen und dabei hängenbleiben kann. Durch die erfindungsgemäßen Ausbildung wird die Funktionsfähigkeit des Magnetventiles auch dann nicht beeinträchtigt, wenn der Aufnahmeraum mit seiner Achse beispielsweise winklig zur Achse des Magnetteiles liegt. Der Ventilteil kann infolge seiner Beweglichkeit gegenüber dem Magnetteil in die jeweilige Schieflage ausweichen, um so die jeweiligen Toleranzen ausgleichen zu können. Mit dem erfindungsgemäßen Verfahren läßt sich das Magnetventil zudem einfach und kostengünstig herstellen.

Weitere Merkmale der Erfindung ergeben sich aus den weiteren Ansprüchen, der Beschreibung und den Zeichnungen.

Die Erfindung wird nachstehend anhand eines in den Zeichnungen dargestellten Ausführungsbeispieles näher beschrieben. Es zeigt:
- Fig. 1: einen Hydraulik- und Magnetteil eines erfindungsgemäßen, als Proportionalmagnetventil ausgebildeten Magnetventils in Explosivdarstellung,
- Fig. 2: im Axialschnitt das Proportionalmagnetventil gemäß Fig. 1 in Einbaulage in einem Gehäuse,
- Fig. 3: das Magnetteil gemäß Fig. 1 teilweise im Axialschnitt bei der Herstellung einer stirnseitigen Ringnut,
- Fig. 4: das Magnetteil gemäß Fig. 3 bei der Aufweitung einer stirnseitigen Axialbohrung.

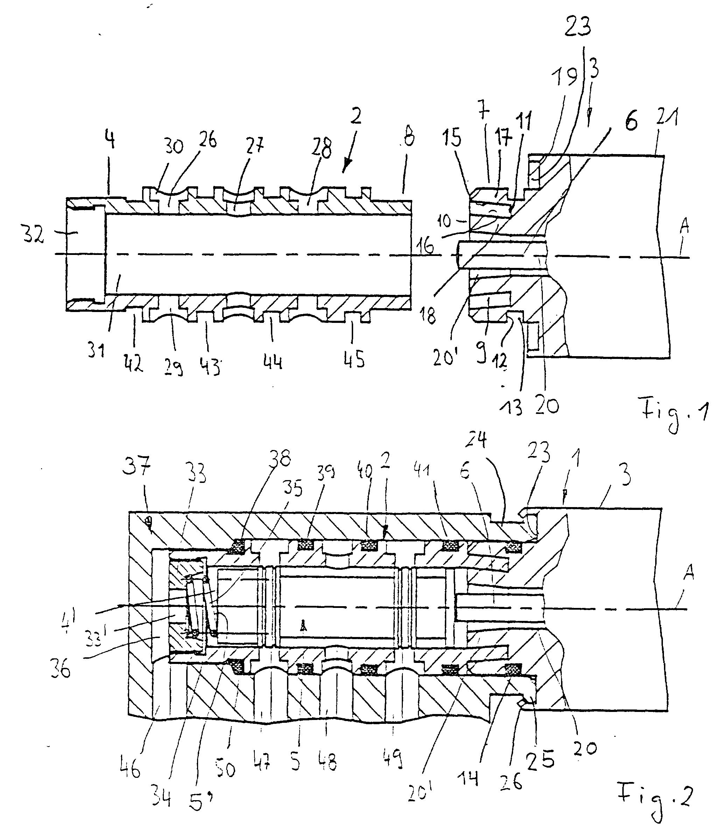

In den Fig. 1 und 2 ist ein als Cartridgeventil ausgebildetes Proportionalmagnetventil 1 dargestellt. Es besteht aus einem Hydraulikteil 2 und einem Magnetteil 3, die in eingebauter Lage miteinander verbunden sind.

Der Hydraulikteil 2 ist in bekannter Weise mit einem Gehäuse 4 und einem darin verschiebbaren Kolben 5 ausgebildet.

Das Gehäuse 4 ist im wesentlichen als Zylinderteil mit einer Axialbohrung 31 ausgebildet. Das Gehäuse 4 weist Anschlüsse 26 bis 28 auf, wie einen Druck-, einen Arbeits- und einen Tankanschluß. Die Bohrung 31 hat an dem vom Magnetteil 3 abgewandten Ende einen erweiterten Abschnitt 32.

Der Magnetteil 3 ist ebenfalls in bekannter Weise mit einer Spule, einem Anker sowie einem Stößel 6 versehen. Insbesondere sind die einander zugewandten und miteinander zu verbindenden Enden 7 und 8 des Magnetteiles 3 und des Hydraulikteiles 2 in besonderer, noch zu beschreibender Weise ausgebildet.

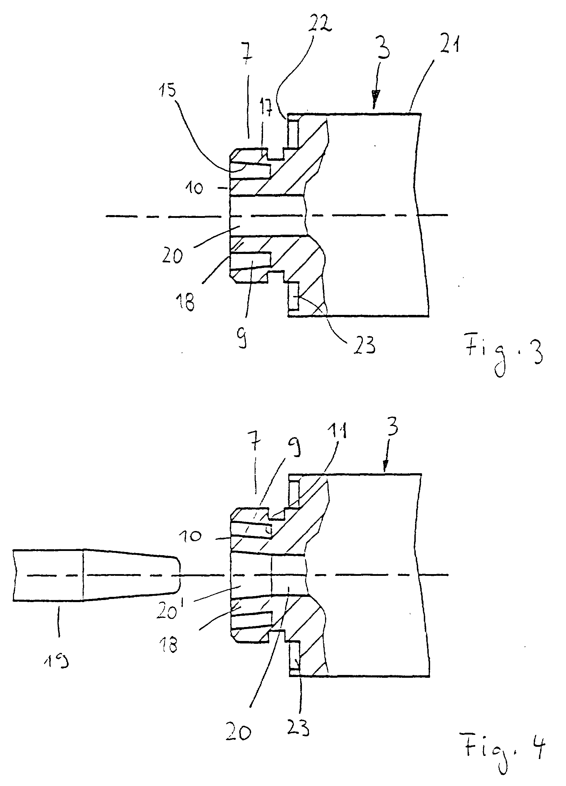

Das Ende 7 des Magnetteiles 3 ist gegenüber dem übrigen Magnetteilkörper 21 verjüngt ausgebildet. Das Ende 7 schließt über eine Schulter 19 an den Magnetteilkörper 21 an. Der Magnetteil 3 weist eine zentrale Bohrung 20 auf. In ihr liegt der Stößel 6, der geringfügig über die Stirnseite 10 des Magnetteilendes 7 vorsteht. Der Magnetteil 3 weist ferner eine in seine Stirnseite 10 mündende Ringnut 9 auf. Ihr Boden 11 verläuft radial und liegt etwa in Höhe einer der Stirnfläche 10 zugewandten Seitenwand 12 einer Umfangsnut 13 für eine Ringdichtung 14 (Fig. 2). Die anderen gegenüberliegenden Innenseiten 15 und 16 der ringförmigen Ringnutwände 17 und 18 verlaufen parallel zueinander und sind gegenüber der Längsachse A des Magnetteiles 3 leicht nach außen geneigt. Die Wand 18 wird bei der Herstellung des Magnetteiles 3 in die beschriebene geneigte Lage plastisch verformt, wie noch beschrieben wird. Wie die Fig. 3 und 4 zeigen, wird zunächst die Ringnut 9 von der Stirnseite 10 aus in das Magnetteilende 7 eingearbeitet, vorzugsweise gefräst. Die Innenseite 15 der Nutwand 17 ist leicht nach außen geneigt, so daß die Breite der Nut 9 nach außen zur Stirnseite 10 hin zunimmt. Anschließend wird die zentrale Bohrung 20 mit einem Aufweitwerkzeug 19, vorzugsweise einem Spreizdübel (Fig. 4) oder dergleichen, aufgeweitet. Durch diese radiale Aufweitung wird die innere Nutwand 18 der Ringnut 9 radial nach außen so gebogen, daß sie auf einem Kegelstumpf liegt und daß sich der vordere Bohrungsabschnitt 20' der Bohrung 20 axial nach außen zur Stirnseite 10 erweitert (Fig. 4). Der Bohrungsabschnitt 20' erstreckt sich bis etwa in Höhe des Bodens 11 der Ringnut 9.

In der Schulter 19 (Fig. 1) des Magnetteiles 3 ist eine Ringnut 23 vorgesehen, die koaxial zur Bohrung 20 liegt und, in Achsrichtung gesehen, das Magnetteilende 7 umgibt. In die Ringnut 23 greift bei montiertem Proportionalmagnetventil 1 ein Ringflansch 24 eines zylindrischen Endabschnittes eines das Proportionalmagnetventil aufnehmenden Bauteiles 37 ein. Die radial äußere Ringwand 26 der Ringnut 23 wird derart plastisch verformt, daß die Ringwand 26 einen am freien Ende des Ringflansches 24 vorgesehenen Formschlußteil 25 übergreift. Dadurch wird eine in alle Richtungen bewegliche, nicht lösbare Verbindung zwischen dem Bauteil 37 und dem Magnetteil 3 erreicht.

Das Ende 8 des Hydraulikteiles 2 ist als zylindrischer Ansatz ausgebildet. Er wird zum Verbinden mit dem Magnetteil 3 bei der Montage in die zuvor auf die beschriebene Weise durch plastische Verformung der inneren Ringnutwand 18 gebildete Ringnut 9 gepreßt. Hierbei wird der Ansatz 8 entsprechend plastisch verformt, d.h. konisch nach innen gebogen. Die Wandung des Ansatzes 8 des Hydraulikteiles 2 ist so dick, daß die plastische Verformung durch entsprechende Axialkraft zuverlässig erfolgt, ohne daß die Ringnutwände 17, 18 plastisch verformt werden. Auf diese Weise wird der Magnetteil 3 mit dem Hydraulikteil 2 vor dem Einbau in das Bauteil 37 axial verbunden, so daß der Hydraulikteil nicht vom Magnetteil abgezogen werden kann.

Der Ansatz 8 und die Ringnut 9 des Magnetteiles 3 sind in ihren Abmessungen so aufeinander abgestimmt, daß der Hydraulikteil 2 relativ zum Magnetteil 3 gekippt werden kann. Auf diese Weise wird zwischen diesen beiden Teilen eine gewisse Beweglichkeit quer zu ihrer Längsachse A erreicht. Dies hat den Vorteil, daß beim Einbau der Einheit aus Hydraulikteil 2 und Magnetteil 3 in den Aufnahmeraum 36 des Bauteiles 37 einwandfrei vermieden wird, daß sich der Kolben 5 verklemmen oder hängenbleiben kann, wenn die Achse des Aufnahmeraumes 36 winklig zur Achse A des Magnetteiles 3 liegt. Der Hydraulikteil 2 kann infolge seiner Beweglichkeit gegenüber dem Magnetteil 3 dann eine entsprechende Schrägstellung einnehmen. Dadurch wird seine Funktionsfähigkeit durch etwaige Toleranzen und eine dadurch bedingte Schrägstellung der miteinander zu verbindenden Teile nicht beeinträchtigt. Die Einheit 2, 3 läßt sich so in den Aufnahmeraum 36 einsetzen, daß selbst bei Fertigungstoleranzen im Durchmesser des Aufnahmeraumes bzw. des Gehäuses 4 des Hydraulikteiles 2 ein Verklemmen des Kolbens 3 einwandfrei verhindert ist. Der Hydraulikteil 2 ist vorteilhaft vor dem Einbau gegenüber dem Magnetteil 3 beweglich, was durch eine entsprechende axiale Länge des Ansatzes 8 und/oder die Tiefe der Ringnut 9 einfach erreicht werden kann. Das axiale Spiel wird im Einbauzustand dadurch aufgehoben, daß zwischen dem Hydraulikteil 2 und einer Innenschulter 50 des Aufnahmeraumes 36 eine Ringdichtung 38 angeordnet ist. Durch sie wird in der Einbaulage eine axiale Vorspannung erzielt, durch welche das axiale Spiel einwandfrei aufgehoben wird.

In den erweiterten Bohrungsabschnitt 32 ist eine Mutter 33 (Fig. 2) geschraubt, die eine zentrale Öffnung 33' aufweist, die in einen sich kegelförmig nach außen erweiternden Öffnungsabschnitt 34 übergeht. Er ist dem Magnetteil 3 zugewandt und nimmt eine Druckfeder 35 auf, die sich bei montiertem Proportionalmagnetventil 1 an dem einen Kolbenende 5' abstützt. Durch die Druckfeder 35 wird der Kolben 4 stets in Anlage am Stößel 6 gehalten. Mit der Mutter 33 kann die Vorspannkraft der Druckfeder 35 genau eingestellt werden.

In der Einbaulage nach Fig. 2 sitzt der Hydraulikteil 2 mit seinem Kolben 5 im Aufnahmeraum 36 des Bauteiles 37. Zur Abdichtung des Hydraulikteiles 2 und des Magnetteiles 3 gegenüber dem Bauteil 37 sind außer der Ringdichtung 38 weitere Ringdichtungen 39, 40, 41 und 14 vorgesehen. Sie liegen in umfangsseitigen Ringnuten 42 bis 45 des Hydraulikgehäuses 4 und der Ringnut 13 des Magnetteiles 3 (Fig. 1). Die Ringnuten 42 bis 45 liegen vor bzw. hinter und zwischen den Anschlüssen 26 bis 28, die in der Einbaulage mit Bohrungen 47 bis 49 im Bauteil 37 verbunden sind. Durch die Ringdichtungen 39 bis 41 ist das Gehäuse 4 des Hydraulikteiles 2 schwimmend im Aufnahmeraum 36 des Bauteiles 37 gelagert.

Bei der Montage des Proportionalmagnetventils 1 wird der Hydraulikteil 2 mit seinem Ende 8 in die Ringnut 9 des Magnetteiles 3 eingepreßt, wobei das Ende, wie beschrieben, radial nach innen plastisch verformt wird. Dadurch ist zwischen diesen beiden Teilen eine Axialsicherung erreicht. Anschließend werden beide Teile gemeinsam in den Aufnahmeraum 36 des Bauteiles 37 eingesetzt, wobei auch bei axialen Abweichungen von Bauteil 37 und Einbaueinheit 2, 3 eine einwandfreie Ausrichtung und Montage gewährleistet ist. Hierbei können eventuelle Schrägstellungen durch die Beweglichkeit des Hydraulikteils 2 gegenüber dem Magnetteil 3 sicher verhindert werden. Die Einheit 2, 3 ist im Bauteil 37 über die Ringdichtungen 38 bis 41, 14 einwandfrei abgedichtet, wobei zusätzlich ein axiales Spiel zwischen dem Hydraulikteil 2 und dem Magnetteil 3 in der beschriebenen Weise aufgehoben wird. Bei der Montage der Einheit 2, 3 im Bauteil 37 wird das Bauteilende 24 in der Ringnut 23 des Magnetteiles 3 in der beschriebenen Weise befestigt.

Die beschriebene Ausbildung kann selbstverständlich auch an jedem anderen Magnetventil vorgesehen sein.

## Patentansprüche

1. Magnetventil, insbesondere Cartridgeventil, mit einem Magnetteil (3), der einen Anker, einen Stößel (6) und eine Spule aufweist, und mit einem Ventilteil (2), vorzugsweise einem Hydraulikteil, der einen Kolben (5) aufweist,
dadurch gekennzeichnet,
- daß der Magnetteil (3) an seiner dem Ventilteil (2) zugewandten Stirnseite (10) eine zentrale Öffnung (20) und eine, vorzugsweise umlaufende, axiale Nut (9) aufweist;
- daß sich die zentrale Öffnung (20) radial nach außen erweitert derart, daß mindestens die radiale innere Begrenzungswand (18) der Nut (9) schräg nach außen geneigt verläuft, und
- daß der Ventilteil (2) einen Steckansatz (8) aufweist, der in die Nut (9) ragt und dessen Wandstärke so gewählt ist, daß das Ventilteil (2) gegenüber dem Magnetteil (3) kippbar ist.

2. Magnetventil nach Anspruch 1,
dadurch gekennzeichnet, daß der Steckansatz (8) des Ventilteiles (2) in der Nut (9) des Magnetteiles (3) verpreßt ist.

3. Magnetventil nach Anspruch 1 oder 2,
dadurch gekennzeichnet, daß der Ventilteil (2) unter Zwischenlage mindestens einer Axial- und/oder Radialdichtung (38 bis 41) im Gehäuse (37) angeordnet ist.

4. Magnetventil nach einem der Ansprüche 1 bis 3,
dadurch gekennzeichnet, daß das Magnetventil ein Proportionalmagnetventil ist.

5. Verfahren zur Herstellung eines Magnetventiles nach einem der Ansprüche 1 bis 4,
dadurch gekennzeichnet, daß an der einen Stirnseite (10) des Magnetteiles (3) eine axial verlaufende Ringnut (9) eingearbeitet, vorzugsweise gefräst, wird, daß eine zentrale Bohrung (20) des Magnetteiles (3) radial aufgeweitet wird, derart, daß die radial innere Begrenzungswand (18) der Ringnut (9) radial nach außen verformt wird, und daß anschließend der Ventilteil (2) mit einem Steckansatz (8) in die Ringnut (9) eingepreßt wird.

6. Verfahren nach Anspruch 5,
dadurch gekennzeichnet, daß die vormontierte Einheit aus Ventilteil (2) und Magnetteil (3) in einen Aufnahmeraum (36) eingesetzt wird.

## Claims

1. A solenoid valve, in particular a cartridge valve, having a magnet part (3) which has a keeper, a tappet (6) and a coil, and having a valve part (2), preferably an hydraulic part, which has a piston (5), characterised in that
- at its end face (10) which faces the valve part (2), the magnet part (3) has a central opening (20) and an axial, preferably circumferential, channel (9);
- the central opening (20) opens out radially in such a manner that at least the radially inner boundary wall (18) of the channel (9) slopes outwards, and
- the valve part (2) has a plug-in projection (8) which projects into the channel (9) and the wall thickness of which is selected such that the valve part (2) is tiltable with respect to the magnet part (3).

2. A solenoid valve according to Claim 1, characterised in that the plug-in projection (8) of the valve part (2) is pressed in the channel (9) of the magnet part (3).

3. A solenoid valve according to Claim 1 or 2, characterised in that the valve part (2) is arranged in the housing (37) with the interpositioning of at least one axial and/or radial seal (38 to 41).

4. A solenoid valve according to any one of Claims 1 to 3, characterised in that the solenoid valve is a proportional solenoid valve.

5. A method of producing a solenoid valve according to any one of Claims 1 to 4,
characterised in that an axially-extending annular channel (9) is made, preferably milled, in one end face (10) of the magnet part (3), in that a central bore (20) of the magnet part (3) is radially expanded in such a manner that the radially inner boundary wall (18) of the annular channel (9) is deformed radially outwards, and in that then the valve part (2) is pressed into the annular channel (9) by means of a plug-in projection (8).

6. A method according to Claim 5, characterised in that the pre-assembled unit of valve part (2) and magnet part (3) is inserted into a receiving chamber (36).

## Revendications

1. Électrovanne, en particulier vanne du type cartouche, comprenant une partie magnétique (3), qui comporte une armature, un poussoir (6) et une bobine, et comprenant une partie de vanne (2), de préférence une partie hydraulique qui comporte un piston (5),
caractérisée en ce que :
- la partie magnétique (3) comporte une ouverture centrale (20) au niveau de sa face frontale (10) tournée vers la partie de vanne (2), et une gorge axiale (9), de préférence périphérique ;
- l'ouverture centrale (20) s'élargit radialement vers l'extérieur de sorte que la paroi de délimitation radiale intérieure (18) au moins de la gorge (9) s'étend en oblique vers l'extérieur ; et
- la partie de vanne (2) comporte un talon d'enfichage (8) qui pénètre dans la gorge (9) et dont l'épaisseur est ainsi choisie que la partie de vanne (2) est susceptible de basculer par rapport à la partie magnétique (3).

2. Électrovanne selon la revendication 1,
caractérisée en ce que le talon enfichable (8) de la partie de vanne (2) est introduit à la presse dans la gorge (9) de la partie magnétique (3).

3. Électrovanne selon l'une ou l'autre des revendications 1 et 2,
caractérisée en ce que la partie de vanne (2) est agencée dans le boîtier (37) avec interposition d'au moins un joint axial et/ou radial (38 à 41).

4. Électrovanne selon l'une des revendications 1 à 3,
caractérisée en ce que l'électrovanne est une électrovanne proportionnelle.

5. Procédé pour la fabrication d'une électrovanne selon l'une des revendications 1 à 4,
caractérisé en ce que l'on usine dans une face frontale (10) de la partie magnétique (3) une gorge annulaire (9) qui s'étend axialement, de préférence par fraisage, en ce que l'on élargit radialement un perçage central (20) de la partie magnétique (3) de sorte que la paroi de délimitation radiale intérieure (18) de la gorge annulaire (9) est déformée radialement vers l'extérieur, et en ce que la partie de vanne (2) est ensuite assemblée à la presse au moyen d'un talon d'enfichage (8) dans la gorge annulaire (9).

6. Procédé selon la revendication 5,
caractérisé en ce que l'unité prémontée formée par la partie de vanne (2) et par la partie magnétique (3) est mise en place dans une chambre de réception (36).
